(19) Europäisches Patentamt / European Patent Office / Office européen des brevets

(11) **EP 2 469 248 B1**

(12) **FASCICULE DE BREVET EUROPEEN**

(45) Date de publication et mention de la délivrance du brevet:
**08.01.2020  Bulletin 2020/02**

(51) Int Cl.:
***G01G 19/42*** *(2006.01)*

(21) Numéro de dépôt: **11195831.0**

(22) Date de dépôt: **27.12.2011**

(54) **Procédé et dispositif de comptage d'articles**

Verfahren und Vorrichtung zum Zählen von Artikeln

Method and device for counting items

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.12.2010  FR 1005123**

(43) Date de publication de la demande:
**27.06.2012  Bulletin 2012/26**

(73) Titulaire: **Balea SA**
**34270 Saint-Mathieu de Trèviers (FR)**

(72) Inventeur: **Cosmas, Vassili**
**34270 Saint-Mathieu de Trèviers (FR)**

(74) Mandataire: **Cornuejols, Georges et al**
**Cassiopi**
**230 Avenue de l'Aube Rouge**
**34170 Castelnau-le-Lez (FR)**

(56) Documents cités:
**FR-A1- 2 938 644**

EP 2 469 248 B1

**Description**

La présente invention concerne un procédé et un dispositif de contrôle de comptage d'articles par pesage. Elle s'applique, en particulier, au contrôle de flux, par exemple lors de mouvements de stock, d'expéditions et, plus particulièrement, à la préparation de commandes.

Il existe deux méthodes principales pour le contrôle pondéral ligne à ligne. La méthode dite « passive » consiste en un rapprochement visuel entre l'information du poids théorique de la ligne de la commande à contrôler (issue d'une source d'information externe type listing papier) et de l'information d'une balance de pesage (l'indicateur de poids) et la méthode dite « active » dans laquelle un système de préparation de commande connaît la valeur du poids théorique de la ligne à contrôler et la compare avec la valeur transmise par l'indicateur de poids.

Dans la méthode passive, au fur et à mesure de la préparation d'une ligne de la commande, la balance pèse ce qui est déposé sur son récepteur de charge. Le contrôle est effectué en poids net, pour permettre à l'opérateur de comparer les poids des lignes individuellement et non le cumul des lignes. La fonction de tare est utilisée pour permettre de remettre le poids net à zéro après chaque contrôle d'une ligne de la commande. Les informations nécessaires à la préparation se trouvent sur un bordereau papier et permettent de faire un contrôle de chaque ligne. Ces informations comportent le nombre d'articles sur une ligne du bordereau de commande et le poids unitaire de ces articles.

Dans l'exemple ci-dessous, on considère que la balance utilisé à une portée de 60 kg et une précision de 20 g.

| | 1 | 2 | 3 |
|---|---|---|---|
| - ligne en préparation | 1 | 2 | 3 |
| - article | A | B | C |
| - adresse de prise | 10-C-3 | 15-B-4 | 25-A-2 |
| - poids individuel d'article (g) | 50 | 100 | 70 |
| - quantité à prendre | 5 | 7 | 12 |
| - poids théorique de la ligne (g) | 250 | 700 | 840 |

On note ici que l'adresse de prise est une information de positionnement de la réserve d'articles.

Dans ce cas, le préparateur sait que la première ligne est censée peser 250 grammes, la deuxième 700 grammes, et la troisième 840 grammes.

Si la différence entre les mesures effectives de poids par la balance et les mesures de poids attendues sont supérieures à la tolérance, il y a soit un problème sur la préparation de la balance, soit les données fournies sont fausses, notamment en ce qui concerne le poids individuel des articles et/ou la tolérance. Dans ces deux cas, l'opérateur doit opérer une petite gymnastique mentale pour déterminer si l'écart est acceptable ou non.

Les avantages de la méthode passive comportent :

- elle est très flexible car peu contraignante,

- elle est facile à mettre en place et

- l'investissement qu'elle représente est faible.

Les inconvénients de la méthode passive comportent :

- le niveau qualitatif est minimal car sans contrainte,

- elle ne tient pas compte des éventuelles variations intrinsèques des articles,

- la tolérance est acceptée ou refusée de manière aléatoire,

- elle repose entièrement sur la bonne volonté de l'opérateur et

- elle ne permet pas de suivi.

La méthode active consiste, en général, à coupler un terminal d'application avec une balance via l'indicateur de poids. La communication entre les systèmes se fait généralement en port série RS232 ou équivalent et l'indicateur de poids permet également de faire de la gestion (liaison wifi, etc.).

Lorsque la phase du processus en est au contrôle pondéral, le terminal requiert l'indicateur de poids pour que ce dernier transmette la valeur nette courante. Si la valeur nette courante correspond à ce que le terminal attend, ce dernier valide le contrôle et permet à l'opérateur d'accéder à la phase suivante du processus. Un système mettant en œuvre la méthode active intègre, en général, un paramètre unique de tolérance d'acceptation de ligne exprimé en pourcentage de ligne. Par exemple :

La tolérance admise est de 5% et la commande comporte :

| | 1 | 2 | 3 |
|---|---|---|---|
| - ligne en préparation | 1 | 2 | 3 |
| - articles | A | B | C |
| - adresse de prise ("picking") | 10-C-3 | 15-B-4 | 25-A-2 |
| - poids individuel d'article (g) | 50 | 100 | 70 |
| - quantité à prendre | 5 | 7 | 12 |
| - poids théorique de la ligne (g) | 250 | 700 | 840 |
| - tolérance en valeur absolue (g) | 12,5 | 35 | 42 |
| - accord si égal ou supérieur à (g) | 237,5 | 665 | 798 |
| - accord si égal ou inférieur à (g) | 262,5 | 735 | 882 |

Pour la ligne « 1 » et l'article « A », avec une balance à 20 g de précision pour une portée 60 kg, la tolérance à 5% équivaut à +/- 12,5 g par rapport à 250 g (pour 5 picks de 50g). Le système de contrôle accepte la ligne si la balance renvoie n'importe quelle valeur entre 237,5 g et 262,5 g. L'échelon étant à 20 g, on arrondit ces limites à 240 et 260 g, respectivement.

En revanche lorsque la quantité d'articles augmente, la tolérance en valeur absolue augmente également et peut dépasser le poids unitaire de l'article. Ce qui pose un problème pour tous les nombres d'articles supérieurs à 20 dans cet exemple de la ligne 1, soit 20 x 50 g = 1000 g. En effet, une tolérance à 5 % représente 50 g soit le poids d'un article.

Les avantages de la méthode active comportent :

- elle est sûre car contraignante,
- elle est transparente pour l'opérateur donc celui-ci est plus productif,
- elle est précise et
- elle permet de conserver la trace des opérations (données réelles et éventuelles forçages).

Les inconvénients de la méthode active comportent :

- elle ne fonctionne que pour de petites quantités d'articles à prélever,
- elle ne s'adapte pas aux poids très faibles ou aux tolérances en pourcentage très faible et
- elle contraint à utiliser la valeur de l'échelon de la balance.

On connaît le document FR 2 938 644 qui décrit un dispositif de pesage. Cependant, ce système ne permet pas de transmission de données sur un réseau d'information et demande l'entrée de nombreuses données, pour chaque article à peser, pour fonctionner.

La présente invention vise à remédier à tout ou partie de ces inconvénients.

A cet effet, selon un premier aspect, la présente invention vise un procédé de comptage d'une pluralité d'articles par pesage selon la revendication 1.

Grâce à la mise en œuvre de la présente invention, on peut mettre en œuvre autant de tolérances différentes qu'il y a de systèmes de pesage, ou balances, la tolérance n'étant pas une valeur centralisée. Cependant, on peut centraliser, sur un système informatique distant, la gestion de commandes relatives à des articles à peser ou compter sur une pluralité de balances, en ne gérant, de manière centralisée, que les fins de décompte d'articles et donc la validation de la préparation du nombre d'articles correct pour chaque commande en cours de traitement.

Selon des caractéristiques particulières, lequel l'information représentative est une information représentative d'une classe d'articles commune à une pluralité d'articles.

Grâce à ces dispositions, les articles peuvent être regroupés en classes correspondant à des articles similaires en termes de tolérances de poids.

Selon des caractéristiques particulières, au cours de l'étape de communication avec un système informatique distant, on met en œuvre un boîtier indépendant indicateur positionné comme intermédiaire pour toutes les communications entre ledit système de pesage et ledit système informatique distant.

Grâce à ces dispositions, l'interfaçage des systèmes de pesage est simplifié et le système informatique distant peut être certain d'échanger des données, des instructions ou des signaux de fin de décompte sans risque d'erreur.

Selon des caractéristiques particulières, ladite constante est égale à une fraction de la précision du système de mesure de poids.

Selon des caractéristiques particulières, au cours de l'étape de détermination de la première valeur limite, la première valeur limite est égale à la somme de ladite constante et du produit du nombre d'articles à contrôler par le poids unitaire moyen des dits articles et par la tolérance sur ledit poids unitaire.

Selon des caractéristiques particulières, au cours de l'étape de détermination de la deuxième valeur limite, la deuxième valeur limite est égale à la somme de ladite constante et du produit du poids unitaire moyen des dits articles par ledit pourcentage acceptable.

Selon des caractéristiques particulières, au cours de l'étape de fixation de la plage de poids, ladite plage s'étend du produit du nombre d'articles par leur poids moyen moins la plus petite des première et deuxième valeurs limites au produit du nombre d'articles par leurs poids moyen plus la plus petite des première et deuxième valeurs limites.

Selon des caractéristiques particulières, le procédé comporte une étape de détermination si la plage de tolérance autorise une erreur de contrôle et une étape d'affichage de la possible erreur de contrôle s'il est déterminé une possible erreur de contrôle.

Selon des caractéristiques particulières, au cours de l'étape d'émission d'une requête, on interroge un terminal informatique qui gère une pluralité de systèmes de pesage.

Selon un deuxième aspect, la présente invention vise un dispositif de comptage d'une pluralité d'articles par pesage selon la revendication 6.

Les avantages, buts et caractéristiques particulières de ce dispositif étant similaires à ceux du procédé objet de la présente invention, ils ne sont pas rappelés ici.

D'autres avantages, buts et caractéristiques de la présente invention ressortiront de la description qui va suivre faite, dans un but explicatif et nullement limitatif, en regard de dessins annexés, dans lesquels :

- la figure 1 représente, schématiquement, un dispositif objet de la présente invention,
- les figures 2 à 4 représentent, schématiquement, trois variantes d'un premier mode de réalisation du dispositif objet de la présente invention,
- les figures 5 à 7 représentent, schématiquement, trois variantes d'un deuxième mode de réalisation du dispositif objet de la présente invention,
- les figures 8 et 9 représentent des courbes détaillant des tolérances mises en œuvre dans le procédé objet de la présente invention,
- la figure 10 représente, schématiquement, un mode de réalisation particulier du dispositif, du système de contrôle et de la balance objets de la présente invention,
- la figure 11 représente des courbes de poids et de tolérances et
- les figures 12A et 12B représentent, sous forme d'un logigramme, des étapes mises en œuvre dans un mode de réalisation particulier du procédé objet de la présente invention.

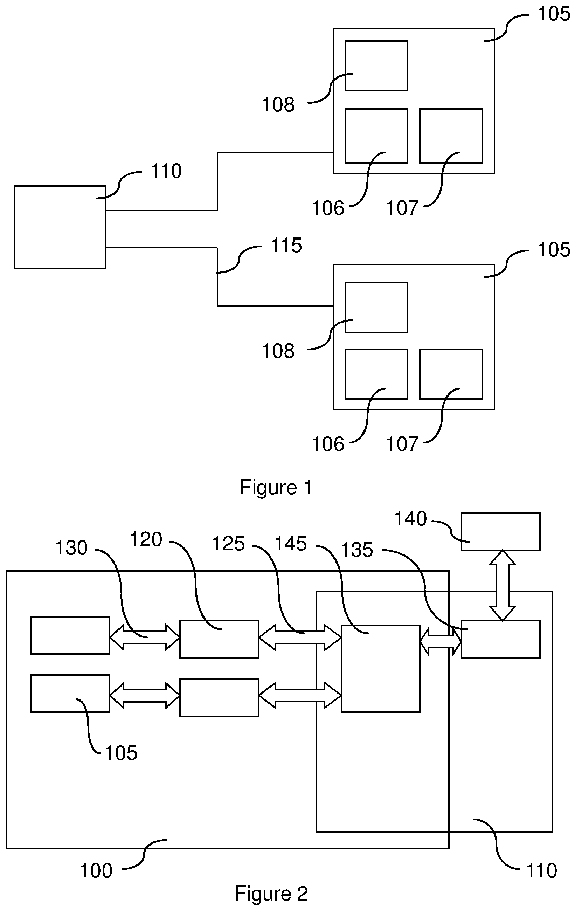

Comme illustré en figure 1, le dispositif objet de la présente invention est un système complet qui permet de relier des systèmes de pesage embarqué 105 (aussi appelés « balances ») à un terminal 110 de type ordinateur à usage général, par exemple de type PC (acronyme de « personal computer » pour ordinateur personnel), par l'intermédiaire d'une liaison 115, par exemple une liaison série filaire (RS232/485) ou sans fil, par exemple Bluetooth. La communication entre le terminal 110 et les systèmes de pesage embarqués 105 se fait préférentiellement grâce à un protocole de communication sur liaison série normé. Le terminal 110 permet de centraliser la gestion d'ensembles d'articles, par exemple d'articles commandés par des clients. Le terminal 110 peut s'interfacer avec un ERP (acronyme de «Enterprise Resource Planning», signifiant littéralement « planification des ressources de l'entreprise », et traduit en français par « progiciel de gestion intégré » (PGI). Ce type de logiciel correspond, pour une organisation, au support de base capable d'assurer une « gestion intégrée », définie comme étant l'interconnexion et l'intégration de l'ensemble des fonctions de l'entreprise dans un système informatique centralisé (et généralement configuré selon le mode client-serveur).

Un système de pesage embarqué 105 est composé de capteurs 106, montés sur un support 107, par exemple un chariot ou un convoyeur, reliés à un convertisseur analogique numérique 108, par exemple homologué « classe III ».

Le dispositif objet de la présente invention se présente sous différents modes de réalisation. Comme illustré en figure 2, dans certains modes de réalisation, le dispositif 100 objet de la présente invention comporte, pour chaque système de pesage 105, un indicateur de pesage 120, par exemple homologuée «classe III ». Le paramétrage du système de pesage 105 se fait alors par l'intermédiaire de l'indicateur de pesage 120 associé. Ce mode de réalisation gère un seul système de pesage 105 par indicateur 120. Dans ce mode de réalisation, pour gérer plusieurs systèmes de pesage embarqué 105, on installe un indicateur de pesage 120 par système de pesage 105, le terminal 110 possédant, directement ou indirectement, autant de liaisons séries 125 disponibles qu'il y a de systèmes de pesage 105. Une autre liaison série 130 relie chaque indicateur de pesage 120 au système de pesage 105 associé.

La figure 2 représente aussi le logiciel client 135 embarqué qui est installé sur le terminal 10, un serveur 140, optionnel, si le logiciel client 135 n'est pas autonome et le protocole de communication sur liaison série 145.

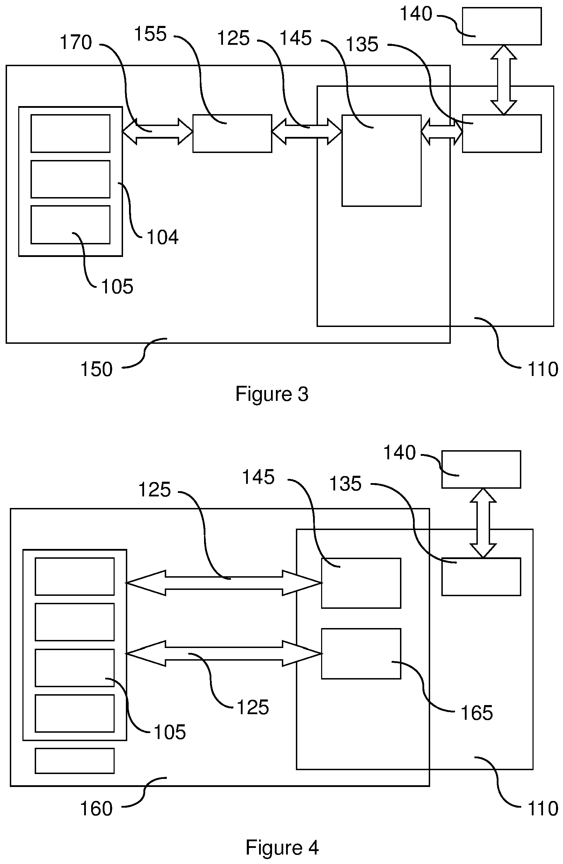

Dans des variantes, par exemple celle du dispositif de pesage 150 illustré en figure 3, un indicateur de pesage 155 permet le paramétrage d'un ensemble 104 de plusieurs systèmes de pesage 105, ici trois, par l'intermédiaire d'une liaison série unique 170. On note qu'il est possible, dans ces variantes, de gérer plus de trois systèmes de pesage embarqué 105 en installant un indicateur de pesage 155 pour chaque ensemble 104 de systèmes de pesage 105, sous réserve que le terminal client 110 possède autant de liaisons séries disponibles que d'ensembles 104 de systèmes de pesage 105 souhaités.

Dans d'autres variantes, telles que celle du dispositif de pesage 160 illustré en figure 4, aucun indicateur de pesage n'est prévu. La communication est directe entre le terminal 110 et chacun des systèmes de pesage 105, par l'intermédiaire d'une liaison série 125. Le paramétrage des systèmes de pesage 105 se fait alors par l'intermédiaire d'un logiciel 165 installé sur le terminal 110 (comme illustré en figure 4) ou un terminal informatique tiers de maintenance : le système de pesage superviseur. Lorsque l'application du système de pesage superviseur est lancée, le port série qui permet de communiquer avec le logiciel client embarqué 135 n'est pas disponible.

Le dispositif de pesage, 100, 150 ou 160, ne gère préférentiellement pas le calcul des tolérances. Les tolérances mises en œuvre, détaillées plus loin, sont fournies à partir d'une base de données d'un tiers, par exemple le fabricant des articles à peser ou compter. Comme on le verra plus loin, ces tolérances peuvent être communes à plusieurs articles, qui sont alors affectés à des classes. On observe, néanmoins, que le dispositif de pesage peut être mis en œuvre pour déterminer les tolérances de poids et, éventuellement, la classe à affecter à chaque article. Le dispositif de pesage, 100, 150 ou 160 permet :

- soit d'envoyer au terminal 110, sur la liaison série 125, une information (par exemple le poids brut ou le poids net mesurés) à la suite d'un élément déclencheur, par exemple l'appui sur une touche physique ou sur une touche reliée (par exemple, un bouton déporté) de l'indicateur de pesage 120, le cas échéant.
- soit l'envoi du poids mesuré, en permanence, sur la liaison série 125. Dans ce cas, le poids peut être lu par le logiciel client embarqué 135 quand il le requiert, dans les modes de réalisation des figures 2 et 3.
- soit au terminal 110 d'effectuer, par la liaison série 125, les demandes suivantes au système de pesage embarqué et de recevoir les réponses :

  - demande de poids brut,
  - demande de poids net,
  - demande de tarage ou
  - demande de zéro.

Le tarage ou la mise à zéro d'un système de pesage 105 peuvent être effectués par l'utilisateur en utilisant les touches correspondantes de l'indicateur 120 ou 155, le cas échéant, ou en envoyant une demande par la liaison série 125.

Un exemple de protocole de communication standard du dispositif est détaillé ci-dessous. Son principe est que la communication entre le terminal 110 et le dispositif 100, 150 ou 160 s'effectue en liaison filaire ou Bluetooth 125, en mettant en œuvre le protocole de liaison série RS232. Ce protocole est, par exemple, paramétré avec les valeurs de paramètre suivantes :

- 38400 bauds,
- 2 bits de stop
- pas de parité et
- pas de contrôle de flux.

Les échanges se font sous forme de trames, constituées d'un caractère de début (noté « STX ») et d'un caractère de fin (« ETX »). Le caractère STX est un octet de valeur « 02 » et le caractère ETX est un octet de valeur « 03 ».

Il existe deux types d'échanges, ceux à l'initiative du terminal 110 et ceux à l'initiative d'un indicateur de pesage 120 ou 155. Si aucun indicateur de pesage 120 ou 155 n'est présent dans le dispositif, comme dans le mode de réalisation illustré en figure 4, les échanges ne se font qu'à l'initiative du terminal 110.

On note que, dans tous les descriptifs des trames d'échanges, le caractère « + » est spécifié comme séparateur d'affichage et ne fait pas partie des trames.

Concernant les informations envoyées par le terminal 110, les trames envoyées par le terminal sont définies selon l'organisation (STX) + (ordre) + (ETX). L' « ordre » est un caractère alphanumérique qui indique la commande à exécuter ou le type d'information à récupérer.

Les valeurs possibles de l'ordre sont :

- « T », une: demande de tarage ou
- « N », une demande de poids net.

Concernant les informations envoyées par le dispositif de pesage 100, 150 ou 160, les trames sont définies selon l'organisation (STX) + (status) + (information) + (ETX).

Le « status » est un ensemble de deux octets, qui représentent, pour le premier, le type de valeur de poids envoyé (net ou brut) et, pour le deuxième, l'état de l'indicateur éventuel (poids à zéro au quart d'échelon, poids instable, poids envoyé à la suite d'un appui sur le bouton).

L' « information » incorporée dans la trame est soit la valeur du poids, soit un message d'erreur (échec de commande, erreur de pesage...). La taille de cette information est fixe (par exemple de dix caractères alphanumériques). L'information de poids envoyée concerne toujours le poids net. Elle est formatée sur huit caractères, justifiés à droite, complétés à gauche par des espaces, plus deux caractères indiquant l'unité de mesure (par exemple le kg).

En ce qui concerne les messages d'erreur, le message envoyé est celui affiché sur l'indicateur de poids 120 ou 155 au moment de la demande ou de l'appui sur le bouton de validation.

On note que le protocole de communication peut être adapté aux besoins du client après définition d'un cahier des charges.

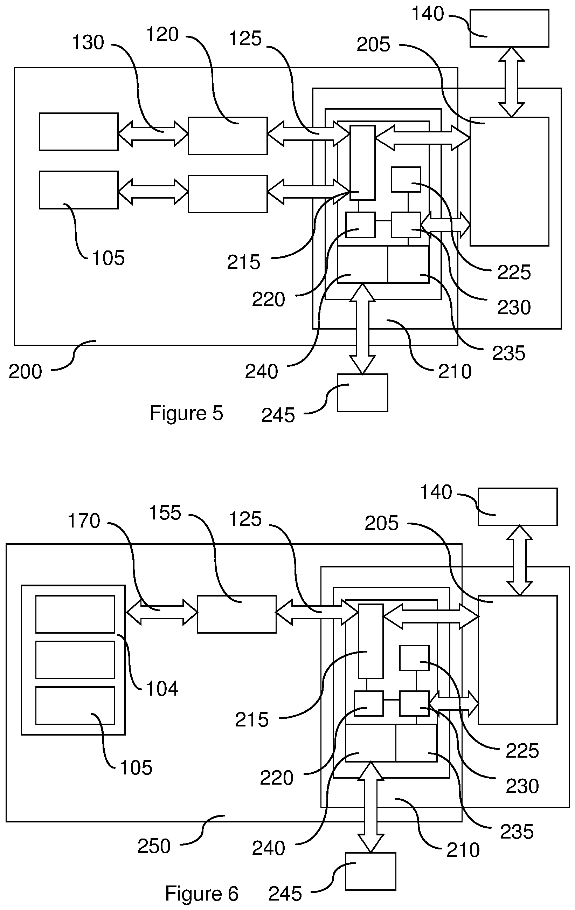

Dans d'autres modes de réalisation du dispositif de pesage objet de la présente invention, le pilotage des systèmes de pesage embarqués 105 se fait au travers d'un flux clavier, en mode simple acquisition, ou grâce à un service de la toile (« webservice »), en mode contrôle - acquisition, installé sur le terminal 110. Ce service peut être directement exploité par un logiciel embarqué installé lui aussi sur le terminal 110. Trois variantes de ces modes de réalisation sont illustrées en regard des figures 5 à 7.

On observe, en figure 5, un dispositif de pesage 200 comportant deux systèmes de pesage 105, deux indicateurs de pesage 120, un terminal 210, un logiciel client embarqué 205 et un serveur 140.

Le terminal 210 héberge un service 215 du système d'exploitation (par exemple Windows, marque déposée), une bibliothèque de liens dynamiques 220 (ou « DLL » pour, en anglais « Dynamic Link Library ») de port série, une bibliothèque de liens dynamiques 225 métier, un service de la toile 230, une interface graphique 235 et un module 240 de table de correspondance des tolérances et de calcul des tolérances.

On rappelle que, dans le cadre du système d'exploitation Windows, une bibliothèque de liens dynamiques peut contenir du code ou des ressources qui sont alors rendus disponibles à d'autres applications.

Le logiciel client 205 communique avec le service 215 en réception d'un flux clavier, en mode de simple acquisition, et avec le service de la toile 230 selon le protocole de communication du service de la toile 230. L'interface graphique 235 communique avec le service de la toile 230 selon le même protocole.

Le module 240 communique aussi sur un emplacement réseau 245, qui sert à la synchronisation de la table de correspondance avec la version stockée localement sur le terminal 210. La table de correspondance contient, pour chaque classe de tolérance, les paramètres du module 240.

Comme illustré en figure 5, dans des modes de réalisation du dispositif objet de l'invention, on gère plusieurs systèmes de pesage embarqués 105 en installant un indicateur de pesage 120 par système de pesage 105, sous réserve que le terminal client 210 possède autant de liaisons séries disponibles que de systèmes de pesage 105 souhaités.

Dans une deuxième variante, illustrée en figure 6, le dispositif de pesage 250 comporte un indicateur de pesage 155 qui permet le paramétrage d'un ensemble 104 de plusieurs systèmes de pesage 105, ici trois. On note qu'il est possible dans de gérer plus de trois systèmes de pesage embarqué 105 en installant un indicateur de pesage 155 pour chaque ensemble 104 de systèmes de pesage 105, sous réserve que le terminal client 210 possède autant de liaisons séries disponibles que d'ensembles 104 de systèmes de pesage 105 souhaités.

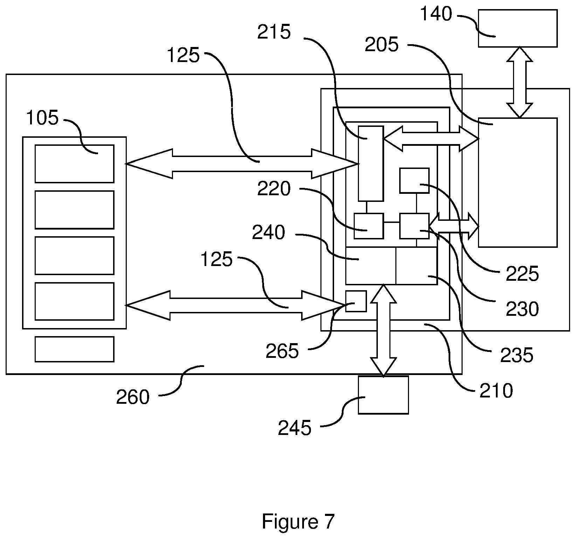

Dans une troisième variante illustrée en figure 7, le dispositif de pesage 260 ne comporte aucun indicateur de pesage. La communication est directe entre le terminal 210 et chacun des systèmes de pesage 105, par l'intermédiaire d'une liaison série 125. Le paramétrage des systèmes de pesage 105 se fait alors par l'intermédiaire d'un logiciel 265 installé sur le terminal 210 (comme illustré en figure 6) ou un terminal informatique tiers de maintenance : le système de pesage superviseur. Lorsque l'application du système de pesage superviseur est lancée, le port série qui permet de communiquer avec le logiciel client embarqué 205 n'est pas disponible. On note que cette version est préférentiellement disponible en HML.

On décrit, ci-dessous, des modes de fonctionnement des variantes du dispositif de pesage, 200, 250 et 260, illustrées en figures 5 à 7. Grâce à un algorithme décrit à la suite de la figure 7, ce dispositif de pesage gère le calcul des tolérances. Il permet aussi de gérer un des trois modes de fonctionnement suivants :

- mode « simple acquisition » du poids,
- mode « contrôle - acquisition » du poids avec gestion de la tolérance et
- mode « contrôle - acquisition » du poids avec gestion de la tolérance et assistance à la pesée.

Le mode « simple acquisition » nécessite un élément déclencheur manuel pour acquérir le poids, c'est-à-dire :

- un appui sur une touche physique de l'indicateur de pesage ou sur une touche reliée ou

- un appui sur une touche physique ou virtuelle du terminal client.

Une fois l'élément déclencheur actionné, le dispositif de pesage envoie le poids brut ou net (selon le paramétrage) au logiciel client embarqué 205, par un flux clavier. En variante, le dispositif de pesage envoie le poids mesuré en permanence. Dans ce cas, le poids peut être récupéré par le logiciel client embarqué 205 quand il le souhaite. Il lui suffit de lire la valeur disponible en permanence au niveau du service de la toile 230.

Le tarage ou la mise à zéro d'un système de pesage 105 peuvent être effectués par l'utilisateur en utilisant

- les touches correspondantes de l'indicateur de pesage 120 ou 155,
- les touches de l'interface graphique 235 sur le terminal 210 ou
- en envoyant une demande par l'intermédiaire du service de la toile 230.

Dans le mode de fonctionnement « contrôle - acquisition », le dispositif de pesage est piloté par l'intermédiaire du service de la toile 230, par le logiciel client embarqué 205.

Les six fonctions de pesage qui peuvent être appelées en mode « contrôle acquisition » par le logiciel client embarqué 205 et exécutées par le dispositif de pesage sont les suivantes :

    1. Demande de poids brut,
    2. Demande de poids net,
    3. Demande de tarage,
    4. Demande de zéro,
    5. Fonction de contrôle du poids net :

        a. Envoi des paramètres d'entrée au WOD + : Poids net unitaire / Quantité / Classe ABC de tolérance du produit
        b. Le WOD+ grâce à l'algorithme WIM vérifie le poids net :

            i. Si le poids net est OK, on renvoie un message poids net OK avec la valeur au logiciel client embarqué et on effectue un tarage (si paramétré)
            ii. Si le poids net n'est pas OK, on renvoie un message poids net non OK avec la valeur au logiciel client embarqué et

    6. Fonction de contrôle du poids brut similaire à la fonction précédente, mais on ne tare jamais

Le mode de fonctionnement « contrôle - acquisition avec assistance » à la pesée nécessite un dispositif de pesage dans sa configuration avec un indicateur de pesage 120 ou 155 physique. Dans ce mode de fonctionnement, le dispositif de pesage est piloté par l'intermédiaire du service de la toile 230 par le logiciel client embarqué 205. Il s'agit du même mode que le mode de fonctionnement « contrôle - acquisition » avec, en plus, une assistance à la pesée sur l'indicateur de pesage :

- des diodes électroluminescentes indiquent des franchissements de valeurs limites et la progression du remplissage d'un contenant, par exemple un carton d'emballage dans lequel on dispose des articles correspondant à une commande en cours de traitement en vue de sone expédition au client et
- un buzzer indique quand ce remplissage est terminé.

En plus des six fonctions décrites pour le mode de fonctionnement « contrôle - acquisition », le mode de fonctionnement « contrôle-acquisition avec assistance » donne accès par l'intermédiaire du service de la toile 230, aux deux fonctions supplémentaires suivantes :

    7. Fonction de démarrage dépose pour une pesée avec, en paramètre, le poids net ou brut unitaire / quantité / classe de tolérance et
    8. Fonction de validation pesée une fois la dépose effectuée (fonction contrôle du poids net ou brut du paragraphe précédent déclenchée par la validation)

Le protocole de communication standard du dispositif de pesage consiste à attaquer la dll métier qui contient les fonctions de pesage (de six à huit fonctions selon le mode de fonctionnement) par l'intermédiaire du service de la toile 230.

L'algorithme de calcul mathématique permet d'obtenir :

- la possibilité de piloter de 1 à n balances de manière simultanée,
- pilotage grâce à un code sous forme de « dll » installée sur un terminal du client,
- interfaçage avec n'importe quel ERP (acronyme de Enterprise Resource Planning en anglais, littéralement « planification des ressources de l'entreprise » ou « progiciel de gestion intégrée », à savoir l'intégration des différentes fonctions de l'entreprise dans un système informatique centralisé configuré selon le mode client-serveur) ou logiciel client embarqué du système de pesage de manière transparente (réponse validant une quantité de produits en utilisant le pesage plutôt que de répondre par un poids) et
- introduction de classes d'articles dans le paramétrage du logiciel de comptage pour éviter d'avoir à paramétrer tous les articles.

Le procédé objet de l'invention permet la détection d'articles manquants ou en excédents dans un processus de contrôle pondéral d'une quantité d'articles, avec une qualité de contrôle supérieure à toute autre système, pour une précision de balance équivalente.

L'innovation apportée par l'algorithme décrit ci-dessous réside dans :

- sa capacité à tenir compte de variables en fonction des contextes de contrôle,
- son utilisation de la mesure poids au 1/10ème d'échelon d'un système de pesage, dans l'algorithme de calculs des tolérances,
- la limite appliquée à la tolérance pour ne pas dépasser la valeur d'un produit dans le résultat de la tolérance admissible et
- la limite appliquée à la tolérance pour ne pas descendre en dessous du minimum de détection possible par la balance.

Cet algorithme s'intègre en version appliquée dans un programme de contrôle de flux (mouvements de stock, expéditions et plus particulièrement dans la préparation de commandes) dans une solution complète de contrôle de flux.

L'algorithme apporte, en plus des autres méthodes, une précision et une cohérence de contrôle en fonction des contextes. Elle permet notamment de :

- détecter des articles manquants ou en excédent dix fois mieux qu'une balance, en utilisant un échelon interne, dix fois plus précis, dans son calcul au lieu de la valeur affichée,
- borner un seuil haut paramétrable dans le calcul de la tolérance pour être certain qu'elle ne dépassera jamais la valeur d'une unité et
- définir un seuil bas tenant compte de la précision de la balance en dessous duquel elle n'ira jamais pour garantir une exploitation possible du contrôle pondéral.

On note que le pilotage grâce à une dll installée sur le terminal du client est une innovation. De même que l'interfaçage du système de pesage, avec n'importe quel ERP ou logiciel client embarqué, de manière transparente.

En particulier, les réponses envoyées par les systèmes de pesage embarqués 105 peuvent se limiter à l'envoi d'un message d'acquittement « OK » lorsque la quantité d'articles à décompter est atteinte, en utilisant le pesage alors que les systèmes de l'art antérieur répondent en transmettant un poids mesuré.

De plus, en introduisant des classes d'articles dans le paramétrage du dispositif, on évite d'avoir à paramétrer tous les articles.

On détaille, ci-dessous, la structure et la fonction des indicateurs de pesage 120 et 155. L'utilisation de ce ou de ces indicateurs de pesage 120 ou 155 apporte les avantages suivants :

- chaque indicateur de pesage ayant une adresse unique sur le réseau reliant le terminal 110 ou 210 aux systèmes de pesage embarqués 105, l'indicateur 120 ou 155 permet de garantir au réseau que le système de pesage embarqué 105 demandée est bien celle qui est utilisée.
- l'indicateur de pesage 120 155 permet de garantir de façon certaine à un système tiers (éventuellement situé à distance par l'intermédiaire d'un autre réseau non représenté), qu'il dialogue avec le bon système de pesage 105.
- de manière pratique, l'utilisation du ou des indicateurs de pesage 120 ou 55 permet, de façon ergonomique pour un technicien, de procéder aux réglages internes de chaque système de pesage 105.

On note que chaque indicateur de pesage 120 ou 155 est un boitier indépendant comprenant une ou plusieurs cartes électroniques, qui dispose d'un afficheur permettant de lire le poids, et d'un clavier permettant d'exécuter les différentes fonctions (tare, mise à zéro, accès au mode réglage...). Cet indicateur de pesage 120 ou 155 dispose d'une adresse unique, comme l'adresse IP (acronyme de « internet protocol » pour « protocole internet ») d'un ordinateur, qui permet de le reconnaitre de façon certaine dans un réseau comportant plusieurs systèmes de pesage 105.

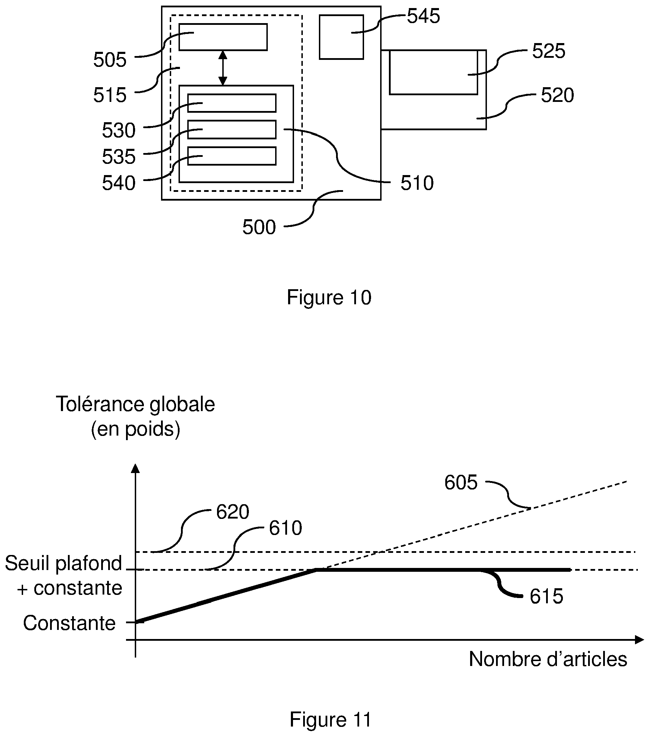

En ce qui concerne l'échelon interne (préférentiellement d'un dixième de l'échelon affiché sur un indicateur de pesage 120 ou 155) de chaque système de pesage 105 et, en particulier, du module 540 (représenté en figure 10), un convertisseur analogique/numérique permet de mesurer un poids de manière dix fois plus précise que ce qui est affiché. Cet échelon interne permet d'avoir une résolution de l'échelle des limites Min / Max également dix fois plus précise. On note que l'échelon interne n'est pas utilisé en tant qu'affichage principal car le poids peut apparaitre moins stable, ce qui rend certaines actions difficiles à exécuter (par exemple, l'utilisation de la touche « Tare » de l'indicateur, car en général il est impossible de faire une tare lorsque le poids est instable...). C'est pour cette raison que cet échelon n'est utilisé qu'en interne à des fins de calcul.

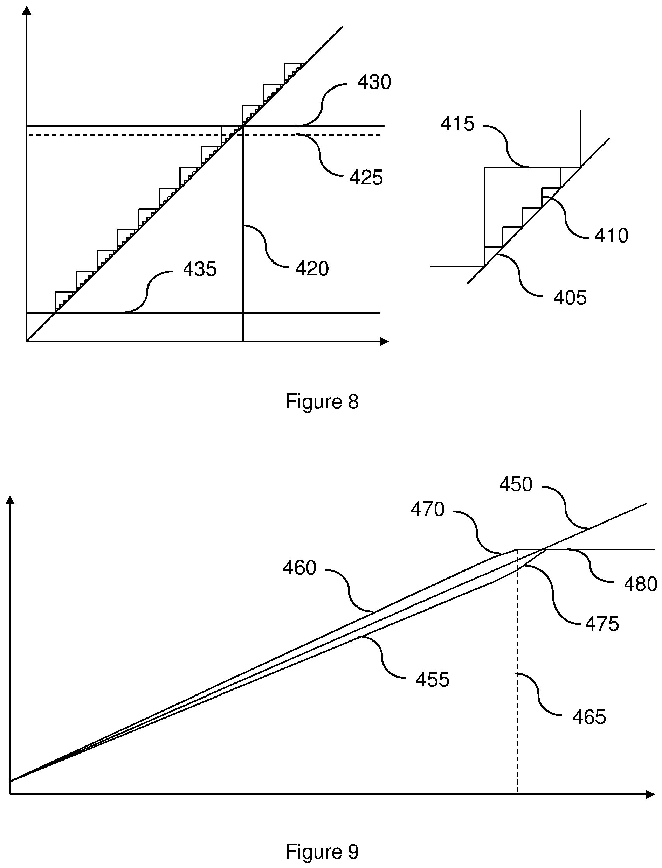

La figure 8 illustre le comportement de l'algorithme au moment de la vérification en termes de détection et de précision. La partie droite de la figure 8 est un agrandissement partiel de la partie gauche, qui donne des courbes représentatives de fonctions :

- la courbe 405 représente la tolérance linéaire,
- la courbe 410 représente l'échelon interne, c'est-à-dire la détection, égale à la précision du système de pesage 105 divisé par dix,
- la courbe 415 représente la précision du système de pesage 105, ou échelon,
- 420 représente la valeur limite du nombre de produits comptés,
- 425 représente la valeur limite maximale, en pourcentage d'une unité,
- 430 représente le poids net limite pour compter des produits et
- 435 représente la limite de la zone indétectable, égale à la moitié de la hauteur d'un échelon.

On peut ainsi voir en quoi l'utilisation de l'échelon interne dans le calcul offre une meilleure résolution que la précision, ici dix fois plus précis.

Par exemple, pour un produit A dont on veut compter cinq pièces, on détermine :

| | |
|---|---|
| - la constante | = 2 g |
| - la tolérance ligne | = 5% |
| - le seuil (ou valeur limite) plafond | = 80% d'une unité de pick (ou produit) |
| - la quantité | = 5 |

La valeur de l'échelon est de 20 g donc la valeur utilisée par l'algorithme est de 2g. L'algorithme calcule :

$$T1 = \text{Constante} + ((\text{Poids d'un pick} * \text{quantité à picker}) * \text{Tolérance ligne})$$

soit

$$T1 = 2 + ((50*5) * 5\%) = 15 \text{ g (arrondi)}$$

$$T2 = \text{Constante} + (\text{Poids d'un pick} * \text{Seuil plafond})$$

soit

$$T2 = 2 + (50 * 80\%) = 42 \text{ g}$$

T3 = Minimum entre T1 et T2

soit T3 = 15 g

Pour le même produit A dont on veut compter 21 pièces, on détermine :

| | |
|---|---|
| - la constante | = 2 g |
| - la tolérance ligne | = 5% |
| - le seuil plafond | = 80% d'une unité de pick |
| - la quantité | = 21 |

La valeur de l'échelon est de 20 g donc la valeur utilisée par l'algorithme est de 2g. L'algorithme calcule :

$$\text{T1} = \text{Constante} + ((\text{Poids d'un pick} * \text{quantité à picker}) * \text{Tolérance ligne})$$

soit

$$\text{T1} = 2 + ((50{*}21) * 5\%) = 55 \text{ g (arrondi)}$$

$$\text{T2} = \text{Constante} + (\text{Poids d'un pick} * \text{Seuil plafond})$$

soit

$$\text{T2} = 2 + (50 * 80\%) = 42 \text{ g}$$

T3 = Minimum entre T1 et T2
soit T3 = 42 g

On voit donc ici que, pour tous les picks du produit A inférieur à 20, le procédé objet de l'invention utilise T1 et que, pour tous les picks supérieurs à 20, il utilise T2.

On observe, en figure 9, La valeur théorique 450, les tolérances minimale 455 et maximale 460, la valeur limite 465 au-delà de laquelle la tolérance utilisée est égale à 80 % du poids unitaire d'un produit. On observe que les courbes de tolérance minimale et maximale présentent des coudes représentant T2. La ligne horizontale 480 représente la tolérance bornée après le point de bascule 470.

Les avantages du procédé objet de la présente invention comportent :

- qu'il est sûr car contraignant,
- qu'il est transparent pour l'opérateur donc plus productif,
- qu'il est plus précis que l'échelon de la balance,
- qu'il peut conserver la trace des opérations (données réelles ou éventuelles forçages),
- qu'il ne dépasse jamais la valeur d'une unité,
- qu'il possède une limite la tolérance (seuil haut/bas) et donc ne bloque pas l'opérateur pour rien,
- qu'il gère les cas différents en fonction de contextes,
- qu'il est paramétrable à chaque ligne donc adapté en toutes circonstances et
- qu'il utilise toujours la tolérance la plus adaptée.

On donne d'autres détails du procédé et du dispositif objets de l'invention en regard des figures 10 à 12B.

On observe, en figure 10, un chariot de transport 500 portant une balance 505 associée à un dispositif de contrôle 510 pour former un système de contrôle 515. Le chariot de transport 500 porte aussi un support 520 d'emballage 525 dans lequel l'opérateur dépose les articles en cours de préparation de commande après contrôle de leur nombre.

Le dispositif de contrôle 510 de comptage d'une pluralité d'articles par pesage, comporte :

- un moyen 530 de détermination d'une première valeur limite fonction d'un nombre d'articles, du poids unitaire moyen des dits articles et d'une tolérance sur ledit poids unitaire moyen,
- un moyen 535 de détermination d'une deuxième valeur limite fonction du poids unitaire moyen des dits articles et d'un pourcentage acceptable et
- un moyen 540 de fixation d'un intervalle de valeurs de poids dans lequel on accepte le comptage des articles, en fonction du produit du nombre d'articles par leur poids moyen, de la première valeur limite et de la deuxième valeur limite.

Enfin, le dispositif de contrôle 510 est associé à un moyen de réception 545 de commandes formées de listes d'articles associés à des quantités et à de adresses dans le stock.

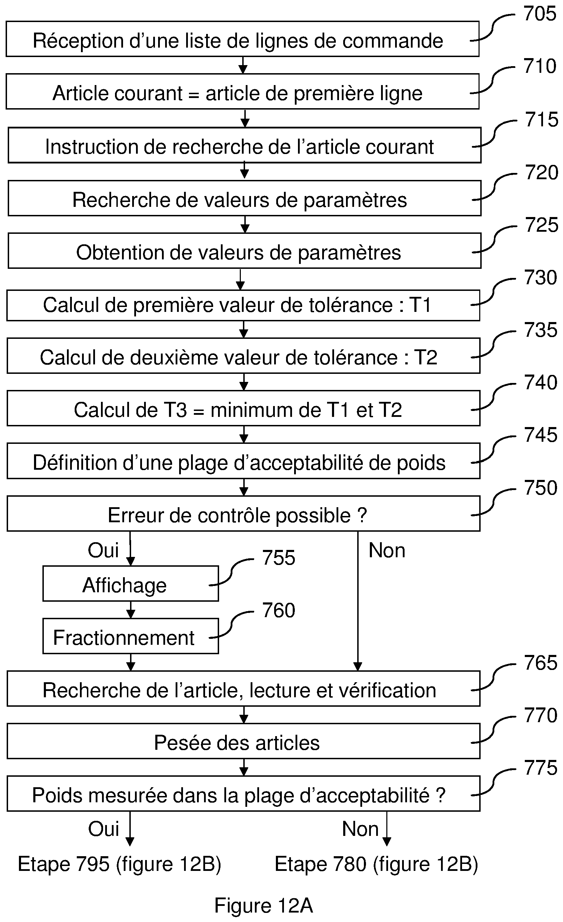

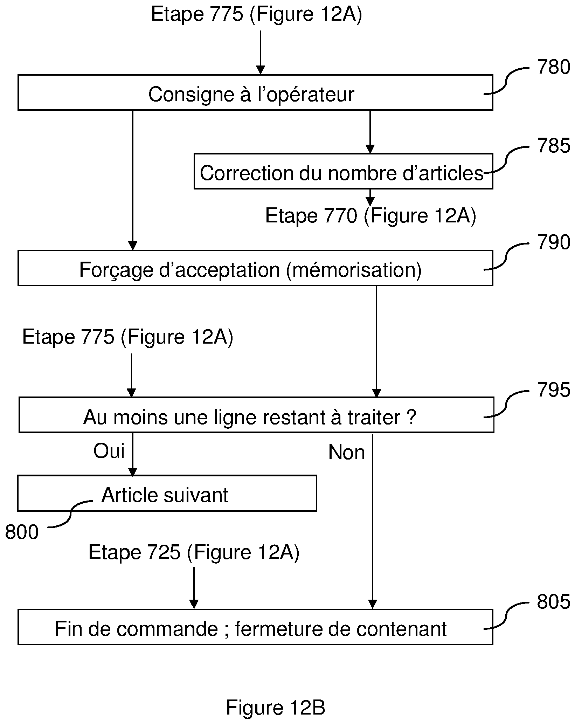

Par exemple, ces moyens 530 à 545 sont constitués d'un ordinateur d'usage général doté de moyens de communication, et d'un logiciel spécifique pour implémenter les étapes illustrées en figures 12A et 12B.

En variante, la balance comporte un dispositif de contrôle 510.

On observe, en figure 11, trois courbes 605, 610 et 615 représentant, respectivement, en fonction d'un nombre d'articles identiques :

- une première valeur de tolérance, exprimée en poids : T1 = Constante + ((Poids d'un article * quantité) * Tolérance sur le poids de l'article, en pourcentage).
- une deuxième valeur de tolérance, exprimée en poids : T2 = Constante + (Poids d'un article * Seuil plafond).
- la plus faible des valeurs T1 et T2.

On a aussi représenté, en figure 11, le poids moyen unitaire 620 pour signifier que T2 est inférieur à ce poids moyen.

Comme on l'observe en figures 12A et 12B, dans des modes de réalisation, au cours d'une étape de préparation d'une commande 705, un système de pesage 105 reçoit d'abord une liste numérique d'articles à incorporer dans un colis correspondant à une commande. Cette liste comporte, en chacune de ses lignes, l'identification d'un article, son adresse dans le stock et le nombre de cet article dans la commande (c'est le nombre d'articles à décompter).

Au cours d'une étape 710, on considère comme article courant l'article identifié dans la première ligne de la liste, appelée « ligne courante » et comme quantité courante, la quantité d'articles courant à mesurer.

Au cours d'une étape 715, on donne instruction à l'opérateur d'aller chercher l'article courant considéré en lui indiquant le lieu où se trouve cet article dans le stock. A cet effet, on met en œuvre une cartographie des stockages d'article dans le site. Préférentiellement, cette instruction est donnée par l'intermédiaire d'un casque audio à liaison sans fil relié au terminal client, d'un écran ou d'une imprimante.

Si les valeurs de paramètres concernant l'article courant n'est pas connue du système de pesage 105, au cours d'une étape 720, le système de pesage 105 envoie une requête à destination du logiciel embarqué dans le terminal client 110 ou 210, que ce terminal 110 ou 210 relaie éventuellement au serveur 140, pour obtenir les valeurs des paramètres indiqués ci-dessus pour la mise en œuvre de l'algorithme :

- le premier paramètre est une constante, qui correspond à une valeur planchée minimum en dessous de laquelle le système ne peut descendre (voir 435 en figure 9). La constante est une valeur minimale en dessous de laquelle le système ne peut jamais descendre. Préférentiellement, cette constante est égale à une fraction de la précision de la balance. Préférentiellement, cette fraction est de un dixième de la précision de la balance.
- la deuxième valeur de paramètre est une tolérance, c'est-à-dire une valeur en pourcentage, représentant la variabilité de poids de l'article courant La tolérance de ligne est une valeur en pourcents de la variabilité du poids d'un article et
- la troisième valeur de paramètre est une valeur limite, ou « seuil », qui représente la valeur au dessus de laquelle la tolérance ne doit pas aller. Elle s'exprime en pourcentage du poids unitaire. Le seuil plafond est une valeur au dessus de laquelle la tolérance exprimée en pourcentage ne s'applique plus. Elle s'exprime en pourcents du poids unitaire.

Cette information peut être une indication de classe, chaque classe correspondant à des valeurs uniformes des valeurs de paramètre mentionnées ci-dessus. On note que, ainsi, lorsque l'on récupère, pour l'article courant, la valeur du poids unitaire, la tolérance en pourcentage ou le seuil plafond, ces valeurs peuvent être exprimées en termes de classe de tolérance, une classe étant commune à une pluralité d'articles. On observe que la constante et le seuil « plafond » sont généralement identiques pour tous les articles d'une même commande et n'ont donc pas besoin d'être recherchés pour chaque nouvelle ligne de commande à traiter.

Au cours d'une étape 725, on reçoit les valeurs de paramètres ou on les déduit de l'indication de classe de tolérance reçue. Ainsi, la tolérance de l'article courant est connue du système de pesage 105, par exemple pour avoir été fournie par le fournisseur des articles.

Un des avantages notables de la mise en œuvre de l'invention tient en ce que chaque article et/ou chaque système de pesage peut correspondre à une tolérance différente, à une constante différente et/ou à une valeur limite différente.

Puis, au cours d'une étape 730, on calcule une première valeur de tolérance, exprimée en poids : T1 = Constante + ((Poids d'un article * quantité définie sur la ligne courante) * Tolérance ligne).

Au cours d'une étape 735, on calcule une deuxième valeur de tolérance, exprimée en poids : T2 = Constante + (Poids d'un article * Seuil plafond)

Au cours d'une étape 740, on détermine T3 comme la plus faible des valeurs T1 et T2.

Au cours d'une étape 745, on définit une plage d'acceptabilité du poids de tous les articles de la ligne : cette plage s'étend du produit du nombre d'articles de la ligne par le poids moyen de l'article moins T3 au produit du nombre d'articles de la ligne par le poids moyen de l'article plus T3.

Au cours d'une étape 750, on détermine si la plage de tolérance autorise une erreur de contrôle.

Si le seuil plafond est supérieur à 50 %, la plage de tolérance autorise une erreur si le nombre d'articles de la ligne est supérieur à la moitié de l'inverse de la tolérance exprimée en nombre décimal. Par exemple, pour une tolérance de 5 %, soit 0,05, l'inverse de la tolérance vaut 20 et si le nombre d'articles est supérieur ou égal à 10, une erreur peut se produire.

Si le seuil plafond est inférieur à 50 %, la plage de tolérance autorise une erreur si le nombre d'articles de la ligne est supérieur à l'inverse de la tolérance exprimée en nombre décimal, multiplié par la différence entre 100 % et le seuil plafond. Par exemple, pour une tolérance de 5 %, soit 0,05, l'inverse de la tolérance vaut 20 et pour un seuil plafond de 30 %, si le nombre d'articles est supérieur ou égal à 14 (calculé comme 70 % de 20), une erreur peut se produire.

Si le résultat de l'étape 750 est positif, au cours d'une étape 755, on affiche à l'opérateur l'existence de ce risque d'erreur de contrôle ainsi que le nombre limite permettant d'éviter ce risque. L'opérateur peut alors, au cours d'une étape 760, fractionner la ligne pour se prémunir de ce risque, en lots dont le nombre d'article est inférieur ou égal à la valeur limite, en sélectionnant une touche de fractionnement. On réalise alors automatiquement une démultiplication de la ligne courante de la commande en autant de lignes que nécessaires pour que leur nombre d'articles soit inférieur à la valeur limite. Par exemple, si, comme dans le deuxième exemple ci-dessus, la valeur limite est de 14, une ligne de 25 articles est divisée en une ligne de 13 articles et une ligne de 12 articles que l'opérateur traite successivement, T1, T2 et T3 étant alors recalculés pour ces nouvelles lignes.

Si le résultat de l'étape 750 est négatif ou à la suite de l'étape 755 (si le fractionnement n'est pas réalisé) ou 760 (si le fractionnement automatique est réalisé), au cours d'une étape 765, l'opérateur se déplace au lieu où se trouve l'article, comme indiqué dans la ligne courante de la commande, on lit le code de l'article, on vérifie que ce code est correct et, sinon, que l'article est correct et on place la quantité visée d'articles sur la plateau de la balance et on presse un bouton de validation.

Au cours d'une étape 770, on pèse les articles posés par l'opérateur sur le plateau de la balance. Au cours de cette pesée, on utilise comme précision, une précision égale à une fraction de la précision affichée, par exemple un dixième de la précision affichée.

Puis, au cours d'une étape 775, on détermine si le poids mesuré entre dans la plage d'acceptation. Si non, au cours d'une étape 780, on délivre à l'opérateur une instruction lui indiquant d'ajouter ou de retirer un ou plusieurs articles. Cette instruction, ou consigne est préférentiellement délivrée par l'intermédiaire d'un casque audio sans fil. L'opérateur corrige le nombre d'articles, au cours d'une étape 785, et renouvelle l'étape 770 en pressant, de nouveau, le bouton de validation. Alternativement à l'étape 785, au cours d'une étape 790, l'opérateur peut « forcer » l'acceptation, auquel cas on mémorise cet événement en regard de la ligne courante.

Si le résultat de l'étape 775 est positif ou à la suite de l'étape 790, au cours d'une étape 795, on détermine s'il reste au moins une ligne à traiter. Si oui, au cours d'une étape 800, on prend comme ligne courante la ligne suivante de la commande et on retourne à l'étape 725. Si non, la préparation de la commande est achevée et on ferme le contenant (par exemple un carton) des articles de toutes les lignes de la commande, au cours d'une étape 805.

On transmet alors au logiciel embarqué du terminal client 110 ou 210 une information représentative de la liste et de l'acquittement ou du forçage de la quantité indiquée à chaque ligne de la liste, donc pour chaque article à décompter.

Grâce à la mise en œuvre des moyens illustrés en figures 1 à 12B, le procédé de comptage d'une pluralité d'articles comporte une étape de communication entre un système de pesage 105 et un système informatique distant 110 ou 210, qui communique avec une pluralité de systèmes de pesage 105, pour obtenir du système informatique 110 ou 210 de l'information représentative de :

- une valeur constante, qui correspond à une valeur planchée minimum en dessous de laquelle le système de pesage ne peut donner une indication du nombre d'articles courant pesés,
- une valeur de tolérance, c'est-à-dire une valeur en pourcentage, représentant la variabilité de poids de l'article courant,
- une valeur limite qui représente la valeur au dessus de laquelle la tolérance ne doit pas aller, exprimée en pourcentage du poids unitaire et
- un nombre d'un article courant à compter.

Préférentiellement, l'information représentative est une information représentative d'une classe d'articles commune à une pluralité d'articles.

Puis, au cours d'une étape de détermination, on détermine une première valeur limite fonction de la valeur constante, de la valeur de tolérance et de la valeur limite et une deuxième valeur limite fonction de la valeur constante, de la valeur de tolérance et de la valeur limite.

Puis, au cours d'une étape de fixation, on fixe une plage de poids dans laquelle le comptage des articles est autorisé, en fonction du produit du nombre d'articles par leur poids moyen, de la première valeur limite et de la deuxième valeur limite.

Le système de pesage effectue alors au moins une étape de comptage d'un nombre d'articles courant représentant un poids situé dans ladite plage de poids jusqu'à ce que le nombre d'article courant à compter ait été atteint :

au cours de chacune des étapes de comptage, on interdit ou, au moins, on signale, la sortie de la plage de poids fixée.

Puis, au cours d'une étape de transmission, le système de pesage 105 transmet au système informatique distant 110 ou 210, un signal représentatif de la fin du décompte du nombre d'articles courants à compter.

Préférentiellement, au cours de l'étape de communication avec un système informatique distant 110 ou 210, on met en œuvre un boîtier indépendant indicateur 120 ou 155 positionné comme intermédiaire pour toutes les communications entre le système de pesage 105 et le système informatique distant 110 ou 210.

Un des avantages de la mise en œuvre de la présente invention tient en ce que chaque système de pesage 105 est autonome et ne retourne au terminal 110 ou 210 que le résultat du comptage des articles ou un acquittement du décompte du nombre d'articles à décompter. Le système de pesage 105 est ainsi autonome et ne mobilise que très peu de ressources au niveau du terminal client 110 ou 210, voire au niveau du serveur 140. Un grand nombre de systèmes de pesage 105 peut ainsi être supervisés et mis en œuvre parallèlement avec très peu de systèmes informatiques, terminaux ou serveurs.

Ainsi, la présente invention propose une méthodologie qui permet la détection de manquants ou d'excédents dans un processus de contrôle pondéral avec une qualité de contrôle supérieure à tout autre système pour une précision de balance équivalente.

Le procédé objet de la présente invention s'intègre, en version appliquée, à un programme de contrôle de flux (mouvements de stock, expéditions et plus particulièrement dans la préparation de commandes) dans une solution complète de contrôle de flux.

La présente invention permet notamment de :

- détecter des manquants ou excédents 10 fois mieux qu'une balance en utilisant l'échelon interne dans son calcul au lieu de la valeur affichée,
- borner un seuil plafond, ou seuil haut, paramétrable dans le calcul de la tolérance pour être certain qu'elle ne dépassera jamais la valeur d'une unité,
- définir un seuil bas tenant compte de la précision de la balance en dessous duquel elle n'ira jamais pour garantir une exploitation possible du contrôle pondéral.

**Revendications**

1. Procédé de comptage d'une pluralité d'articles, comportant:

  - une étape (720) de communication entre un système de pesage (105) et un système informatique distant (110, 210) communiquant avec une pluralité de systèmes de pesage, au cours de laquelle on met en œuvre un boîtier indépendant indicateur positionné comme intermédiaire pour toutes les communications entre ledit système de pesage et ledit système informatique distant, pour que ledit système de pesage obtienne du système informatique de l'information représentative, pour une classe d'articles commune à une pluralité d'articles, de :

    - une valeur constante, qui correspond à une valeur plancher minimum en dessous de laquelle le système de pesage ne peut donner une indication du nombre d'articles courant pesés,
    - une valeur de tolérance, c'est-à-dire une valeur en pourcentage, représentant la variabilité de poids de l'article courant,
    - une valeur limite qui représente la valeur au dessus de laquelle la tolérance ne doit pas aller, exprimée en pourcentage du poids unitaire et
    - un nombre d'un article courant à compter ;

    - une étape (730) de détermination, par ledit système de pesage, d'une première valeur limite fonction de la valeur constante, de la valeur de tolérance et de la valeur limite, la première valeur limite étant égale à la somme de ladite valeur constante et du produit du nombre d'articles à contrôler par le poids unitaire moyen des dits articles et par la tolérance sur ledit poids unitaire ;
    - une étape (735) de détermination, par ledit système de pesage, d'une deuxième valeur limite fonction de la valeur constante, de la valeur de tolérance et de la valeur limite, la deuxième valeur limite étant égale à la somme de ladite valeur constante et du produit du poids unitaire moyen des dits articles par ledit pourcentage acceptable ;
    - une étape (740, 745) de fixation, par ledit système de pesage, d'une plage de poids dans laquelle le comptage des articles est autorisé, en fonction du produit du nombre d'articles par leur poids moyen, de la première valeur limite et de la deuxième valeur limite,
    - au moins une étape (750 à 800) de comptage, par ledit système de pesage, d'un nombre d'articles courant représentant un poids situé dans ladite plage de poids jusqu'à ce que le nombre d'article courant à compter ait été atteint et

- une étape (805) de transmission, par ledit système de pesage au système informatique distant, d'un signal représentatif de la fin du décompte du nombre d'articles courants à compter.

2. Procédé selon la revendication 1, dans lequel ladite constante est égale à une fraction de la précision du système de mesure de poids.

3. Procédé selon l'une des revendications 1 ou 2, dans lequel, au cours de l'étape (740, 745) de fixation de la plage de poids, ladite plage s'étend du produit du nombre d'articles par leur poids moyen moins la plus petite des première et deuxième valeurs limites au produit du nombre d'articles par leurs poids moyen plus la plus petite des première et deuxième valeurs limites.

4. Procédé selon l'une des revendications 1 à 3, qui comporte une étape (750) de détermination si la plage de tolérance autorise une erreur de contrôle et une étape (755) d'affichage de la possible erreur de contrôle s'il est déterminé une possible erreur de contrôle.

5. Procédé selon l'une des revendications 1 à 4, qui comporte une étape de synchronisation, en mettant en œuvre un emplacement réseau (245), d'une table de correspondance, pour chaque classe d'articles, de tolérances et de calcul des tolérances, avec une version de ladite table de correspondance stockée localement.

6. Dispositif (100, 200) de comptage d'une pluralité d'articles, **caractérisé en ce qu'**il comporte :

- un moyen de communication entre un système de pesage (105) et un système informatique distant (110, 210) communiquant avec une pluralité de systèmes de pesage, ledit moyen de communication comportant un boîtier indépendant indicateur positionné comme intermédiaire pour toutes les communications entre ledit système de pesage et ledit système informatique distant et étant configuré pour que le système de pesage obtienne du système informatique de l'information représentative, pour une classe d'articles commune à une pluralité d'articles, de :

- une valeur constante, qui correspond à une valeur planchée minimum en dessous de laquelle le système de pesage ne peut donner une indication du nombre d'articles courant pesés,
- une valeur de tolérance, c'est-à-dire une valeur en pourcentage, représentant la variabilité de poids de l'article courant,
- une valeur limite qui représente la valeur au dessus de laquelle la tolérance ne doit pas aller, exprimée en pourcentage du poids unitaire et
- un nombre d'un article courant à compter ;

- un moyen de détermination, par ledit système de pesage, d'une première valeur limite fonction de la valeur constante, de la valeur de tolérance et de la valeur limite, la première valeur limite étant égale à la somme de ladite valeur constante et du produit du nombre d'articles à contrôler par le poids unitaire moyen des dits articles et par la tolérance sur ledit poids unitaire,
- un moyen de détermination, par ledit système de pesage, d'une deuxième valeur limite fonction de la valeur constante, de la valeur de tolérance et de la valeur limite, la deuxième valeur limite étant égale à la somme de ladite valeur constante et du produit du poids unitaire moyen des dits articles par ledit pourcentage acceptable,
- un moyen de fixation, par ledit système de pesage, d'une plage de poids dans laquelle le comptage des articles est autorisé, en fonction du produit du nombre d'articles par leur poids moyen, de la première valeur limite et de la deuxième valeur limite et
- un moyen de transmission, par ledit système de pesage au système informatique distant, d'un signal représentatif de la fin du décompte du nombre d'articles courants à compter, lorsque, en au moins une étape de comptage, ledit système de pesage a compter un nombre d'articles courant représentant un poids situé dans ladite plage de poids jusqu'à ce que le nombre d'article courant à compter ait été atteint.

7. Dispositif selon la revendication 6, dans lequel les moyens de communication et de déterminations sont adaptés à ce que ladite constante soit égale à une fraction de la précision du système de mesure de poids.

8. Dispositif selon l'une des revendications 6 ou 7, dans lequel le moyen de fixation de la plage de poids est configuré pour que ladite plage s'étende du produit du nombre d'articles par leur poids moyen moins la plus petite des première et deuxième valeurs limites au produit du nombre d'articles par leurs poids moyen plus la plus petite des première et deuxième valeurs limites.

9.  Dispositif selon l'une des revendications 6 à 8, qui comporte un moyen de détermination si la plage de tolérance autorise une erreur de contrôle et un moyen d'affichage de la possible erreur de contrôle s'il est déterminé une possible erreur de contrôle.

10.  Dispositif selon l'une des revendications 6 à 9, qui comporte un moyen de synchronisation, mettant en œuvre un emplacement réseau (245), d'une table de correspondance, pour chaque classe d'articles, de tolérances et de calcul des tolérances, avec une version de ladite table de correspondance stockée localement.

**Patentansprüche**

1.  Zählverfahren einer Mehrzahl von Artikeln, umfassend:

    - einen Kommunikationsschritt (720) zwischen einem Wiegesystem (105) und einem entfernten Informatiksystem (110, 210), das mit einer Vielzahl von Wiegesystemen kommuniziert, in dessen Verlauf ein unabhängiges Indikatorgehäuse umgesetzt wird, das als Zwischenstation für alle Kommunikationen zwischen dem genannten Wiegesystem und dem genannten entfernten Informatiksystem positioniert ist, damit das genannte Wiegesystem von dem Informatiksystem repräsentative Informationen für eine Artikelklasse erhält, die einer Vielzahl von Artikeln gemeinsam ist, über:

    - einen konstanten Wert, der einem untersten Mindestwert entspricht, unter dem das Wiegesystem keine Angabe über die aktuelle Anzahl von gewogenen Artikeln geben kann,
    - einen Toleranzwert, d. h. einen Wert in Prozent, der die Variabilität des Gewichts des aktuellen Artikels darstellt,
    - einen Grenzwert, der den Wert darstellt, den die Toleranz nicht übersteigen darf, ausgedrückt in Prozent des Einheitsgewichts, und
    - eine aktuelle Anzahl eines zu zählenden Artikels;

    - einen Bestimmungsschritt (730) eines ersten Grenzwertes als Funktion des konstanten Wertes, des Toleranzwertes und des Grenzwertes durch das genannte Wiegesystem, wobei der erste Grenzwert gleich der Summe des genannten konstanten Wertes und des Produkts der Anzahl von zu kontrollierenden Artikeln durch das durchschnittliche Einheitsgewicht der genannten Artikel und durch die Toleranz für das genannte Einheitsgewicht ist;
    - einen Bestimmungsschritt (735) eines zweiten Grenzwertes als Funktion des konstanten Wertes, des Toleranzwertes und des Grenzwertes durch das genannte Wiegesystem, wobei der zweite Grenzwert gleich der Summe des genannten konstanten Wertes und des Produkts des durchschnittlichen Einheitsgewichts der genannten Artikel durch den genannten akzeptablen Prozentsatz ist;
    - einen Festlegungsschritt (740, 745) eines Gewichtsbereichs durch das genannte Wiegesystem, in dem das Zählen der Artikel in Abhängigkeit von dem Produkt der Anzahl von Artikeln durch ihr durchschnittliches Gewicht, des ersten Grenzwertes und des zweiten Grenzwertes, zugelassen ist,
    - wenigstens einen Zählschritt (750 bis 800) einer aktuellen Anzahl von Artikeln durch das genannte Wiegesystem, die ein Gewicht darstellen, das in dem genannten Gewichtsbereich angeordnet ist, bis die aktuelle Anzahl von zu zählenden Artikeln erreicht ist, und
    - einen Übertragungsschritt (805) eines Signals, das das Ende des Zählen der Anzahl von aktuellen, zu zählenden Artikeln darstellt, durch das genannte Wiegesystem auf das entfernte Informatiksystem.

2.  Verfahren gemäß Anspruch 1, bei dem die genannte Konstante gleich einem Bruchteil der Präzision des Messsystems des Gewichts ist.

3.  Verfahren gemäß einem der Ansprüche 1 oder 2, bei dem im Verlauf des Festlegungsschritts (740, 745) des Gewichtsbereichs der genannte Bereich sich vom Produkt der Anzahl von Artikeln durch ihr durchschnittliches Gewicht abzüglich des kleineren des ersten und zweiten Grenzwertes zu dem Produkt der Anzahl von Artikeln durch ihren kleinsten Durchschnittsgewichten des ersten und zweiten Grenzwertes erstreckt.

4.  Verfahren gemäß einem der Ansprüche 1 bis 3, das einen Bestimmungsschritt (750) darüber umfasst, ob der Toleranzbereich einen Kontrollfehler und einen Anzeigeschritt (755) des möglichen Kontrollfehlers zulässt, wenn ein möglicher Kontrollfehler bestimmt wird.

5. Verfahren gemäß einem der Ansprüche 1 bis 4, das einen Synchronisationsschritt einer Entsprechungstabelle für jede Artikel-, Toleranz- und Berechnungsklasse der Toleranzen umfasst, indem ein Netzstandort (245) mit einer Version der genannten, lokal gespeicherten Entsprechungstabelle umgesetzt wird.

6. Zählvorrichtung (100, 200) einer Vielzahl von Artikeln, **dadurch gekennzeichnet, dass** sie umfasst:

- ein Kommunikationsmittel zwischen einem Wiegesystem (105) und einem entfernten Informatiksystem (110, 210), das mit einer Vielzahl von Wiegesystemen kommuniziert, wobei das genannte Kommunikationsmittel ein unabhängiges Indikatorgehäuse umfasst, das als Zwischenstation für alle Kommunikationen zwischen dem genannten Wiegesystem und dem genannten entfernten Informatiksystem positioniert ist und gestaltet ist, damit das genannte Wiegesystem von dem Informatiksystem repräsentative Informationen für eine Artikelklasse erhält, die einer Vielzahl von Artikeln gemeinsam ist, über:

- einen konstanten Wert, der einem untersten Mindestwert entspricht, unter dem das Wiegesystem keine Angabe über die aktuelle Anzahl von gewogenen Artikeln geben kann,
- einen Toleranzwert, d. h. einen Wert in Prozent, der die Variabilität des Gewichts des aktuellen Artikels darstellt,
- einen Grenzwert, der den Wert darstellt, den die Toleranz nicht übersteigen darf, ausgedrückt in Prozent des Einheitsgewichts, und
- eine aktuelle Anzahl eines zu zählenden Artikels;

- ein Bestimmungsmittel eines ersten Grenzwertes als Funktion des konstanten Wertes, des Toleranzwertes und des Grenzwertes durch das genannte Wiegesystem, wobei der erste Grenzwert gleich der Summe des genannten konstanten Wertes und des Produkts der Anzahl von zu kontrollierenden Artikeln durch das durchschnittliche Einheitsgewicht der genannten Artikel und durch die Toleranz für das genannte Einheitsgewicht ist;
- ein Bestimmungsmittel (735) eines zweiten Grenzwertes als Funktion des konstanten Wertes, des Toleranzwertes und des Grenzwertes durch das genannte Wiegesystem, wobei der zweite Grenzwert gleich der Summe des genannten konstanten Wertes und des Produkts des durchschnittlichen Einheitsgewichts der genannten Artikel durch den genannten akzeptablen Prozentsatz ist;
- ein Festlegungsmittel eines Gewichtsbereichs durch das genannte Wiegesystem, in dem das Zählen der Artikel in Abhängigkeit von dem Produkt der Anzahl von Artikeln durch ihr durchschnittliches Gewicht, des ersten Grenzwertes und des zweiten Grenzwertes, zugelassen ist, und
- ein Übertragungsmittel eines Signals, das das Ende der Zählung der Anzahl von aktuellen, zu zählenden Artikeln in wenigstens einem Zählschritt darstellt, durch das genannte Wiegesystem, wenn wenigstens bei einem Zählschritt, das genannte Wiegesystem zum Zählen einer aktuellen Anzahl von Artikeln ein Gewicht darstellt, das in dem genannten Gewichtsbereich angeordnet ist, bis die aktuelle Anzahl von zu zählenden Artikeln erreicht ist.

7. Vorrichtung gemäß Anspruch 6, bei der die Kommunikations- und Bestimmungsmittel geeignet sind, dass die genannte Konstante gleich einem Bruchteil der Präzision des Messsystems des Gewichts ist.

8. Vorrichtung gemäß einem der Ansprüche 6 oder 7, bei der das Festlegungsmittel des Gewichtsbereichs gestaltet ist, damit der genannte Bereich sich vom Produkt der Anzahl von Artikeln durch ihr durchschnittliches Gewicht abzüglich des kleinsten des ersten und zweiten Grenzwertes zu dem Produkt der Anzahl von Artikeln durch ihr kleinstes Durchschnittsgewicht des ersten und zweiten Grenzwertes erstreckt.

9. Vorrichtung gemäß einem der Ansprüche 6 bis 8, die einen Bestimmungsschritt darüber umfasst, ob der Toleranzbereich einen Kontrollfehler und ein Anzeigemittel des möglichen Kontrollfehlers zulässt, wenn ein möglicher Kontrollfehler bestimmt wird.

10. Verfahren gemäß einem der Ansprüche 6 bis 9, das ein Synchronisationsmittel umfasst, das einen Netzstandort (245) umsetzt, einer Entsprechungstabelle für jede Artikel-, Toleranz- und Berechnungsklasse der Toleranzen mit einer Version der genannten, lokal gespeicherten Entsprechungstabelle umfasst.

**EP 2 469 248 B1**

**Claims**

1. Method of counting a plurality of articles, comprising:

- a step (720) of communication between a weighing system (105) and a remote computer system (110, 210) communicating with a plurality of weighing systems, during which an independent indicator housing is utilized, positioned as intermediary for all communications between said weighing system and said remote computer system, such that said weighing system receives from said computer system information representative, for an article class common to a plurality of articles, of:

- a constant value, which corresponds to a minimum threshold value below which the weighing system cannot give an indication of the number of current articles weighed;
- a tolerance value, i.e. a percentage value, representing the variability in weight of the current article;
- a limit value, which represents the value that the tolerance must not exceed, expressed as a percentage of the unit weight; and
- a number of a current article to be counted;

- a step (730) of said weighing system determining a first limit value as a function of the constant value, the tolerance value and the limit value, the first limit value being equal to the sum of said constant value and the product of the number of articles to be controlled multiplied by the mean unit weight of said articles and by the tolerance for said unit weight;
- a step (735) of said weighing system determining a second limit value as a function of the constant value, the tolerance value and the limit value, the second limit value being equal to the sum of said constant value and the product of the mean unit weight of said articles multiplied by said acceptable weight;
- a step (740, 745) of said weighing system setting a weight range within which the counting of articles is authorized, as a function of the product of the number of articles multiplied by their mean unit weight, the first limit value and the second limit value;
- at least one step (750 to 800) of said weighing system counting a number of current articles representing a weight located in said weight range until the number of current articles to be counted has been reached; and
- a step (805) of said weighing system transmitting a signal to the remote computer system representative of the end of the count of the number of current articles to be counted.

2. Method according to claim 1, wherein said constant is equal to a fraction of the weight measurement system's accuracy.

3. Method according to one of claims 1 or 2, wherein, during the step (740, 745) of setting the weight range, said range extends from the product of the number of articles multiplied by their mean unit weight minus the smaller of the first and second limit values to the product of the number of articles multiplied by their mean unit weight plus the smaller of the first and second limit values.

4. Method according to one of claims 1 to 3, which comprises a step (750) of determining whether the tolerance range authorizes a control error and a step (755) of displaying the possible control error if a possible control error is identified.

5. Method according to one of claims 1 to 4, which comprises a step of synchronizing, by utilizing a network location (245), a correspondence table, for each class of articles, of tolerances and tolerance calculation, with a version of said correspondence table stored locally.

6. Device (100, 200) for counting a plurality of articles, **characterized in that** it comprises:

- a means for communication between a weighing system (105) and a remote computer system (110, 210) communicating with a plurality of weighing systems, said communication means comprising an independent indicator housing, positioned as intermediary for all the communications between said weighing system and said remote computer system, and configured such that the weighing system receives from the computer system information representative, for an article class common to a plurality of articles, of:

- a constant value, which corresponds to a minimum threshold value below which the weighing system cannot give an indication of the number of current articles weighed;
- a tolerance value, i.e. a percentage value, representing the variability in weight of the current article;

- a limit value, which represents the value that the tolerance must not exceed, expressed as a percentage of the unit weight; and
- a number of a current article to be counted;

- a means for said weighing system to determine a first limit value as a function of the constant value, the tolerance value and the limit value, the first limit value being equal to the sum of said constant value and the product of the number of articles to be controlled multiplied by the mean unit weight of said articles and by the tolerance for said unit weight;
- a means for said weighing system to determine a second limit value as a function of the constant value, the tolerance value and the limit value, the second limit value being equal to the sum of said constant value and the product of the mean unit weight of said articles multiplied by said acceptable weight;
- a means for said weighing system to set a weight range within which the counting of articles is authorized, as a function of the product of the number of articles multiplied by their mean unit weight, the first limit value and the second limit value; and
- a means for said weighing system to transmit a signal to the remote computer system representative of the end of the count of the number of current articles to be counted, when, in at least one counting step, said weighing system has counted a number of current articles representing a weight located within said weight range until the number of current articles to be counted has been reached.

7. Device according to claim 6 wherein the communication and determination means are designed such that said constant is equal to a fraction of the weight measurement system's accuracy.

8. Device according to one of claims 6 or 7, wherein the means for setting the weight range is configured such that said range extends from the product of the number of articles multiplied by their mean unit weight minus the smaller of the first and second limit values to the product of the number of articles multiplied by their mean unit weight plus the smaller of the first and second limit values.

9. Device according to one of claims 6 to 8, which comprises a means for determining whether the tolerance range authorizes a control error and a means for displaying the possible control error if a possible control error is identified.

10. Device according to one of claims 6 to 9, which comprises a means for synchronizing, by utilizing a network location (245), a correspondence table, for each class of articles, of tolerances and tolerance calculation, with a version of said correspondence table stored locally.

Figure 1

Figure 2

Figure 3

Figure 4

Figure 5

Figure 6

Figure 7

Figure 8

Figure 9

505

515

530

535

540

545

525

520

510

500

Figure 10

Tolérance globale
(en poids)

605

620

610

Seuil plafond
+ constante

615

Constante

Nombre d'articles

Figure 11

| Réception d'une liste de lignes de commande | — 705 |
| Article courant = article de première ligne | — 710 |
| Instruction de recherche de l'article courant | — 715 |
| Recherche de valeurs de paramètres | — 720 |
| Obtention de valeurs de paramètres | — 725 |
| Calcul de première valeur de tolérance : T1 | — 730 |
| Calcul de deuxième valeur de tolérance : T2 | — 735 |
| Calcul de T3 = minimum de T1 et T2 | — 740 |
| Définition d'une plage d'acceptabilité de poids | — 745 |
| Erreur de contrôle possible ? | — 750 |

Oui → Affichage — 755 → Fractionnement — 760

Non

| Recherche de l'article, lecture et vérification | — 765 |
| Pesée des articles | — 770 |
| Poids mesurée dans la plage d'acceptabilité ? | — 775 |

Oui → Etape 795 (figure 12B)

Non → Etape 780 (figure 12B)

Figure 12A

Etape 775 (Figure 12A)

Consigne à l'opérateur — 780

Correction du nombre d'articles — 785

Etape 770 (Figure 12A)

Forçage d'acceptation (mémorisation) — 790

Etape 775 (Figure 12A)

Au moins une ligne restant à traiter ? — 795

Oui    Non

Article suivant

800

Etape 725 (Figure 12A)

Fin de commande ; fermeture de contenant — 805

Figure 12B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2938644